(19) Europäisches Patentamt / European Patent Office / Office européen des brevets

(11) **EP 2 350 619 B1**

(12) **FASCICULE DE BREVET EUROPEEN**

(45) Date de publication et mention de la délivrance du brevet:
**19.06.2019 Bulletin 2019/25**

(21) Numéro de dépôt: **09755927.2**

(22) Date de dépôt: **19.10.2009**

(51) Int Cl.:
*G01N 21/71* (2006.01)    *G01J 3/443* (2006.01)

(86) Numéro de dépôt international:
**PCT/FR2009/001221**

(87) Numéro de publication internationale:
**WO 2010/052380 (14.05.2010 Gazette 2010/19)**

(54) **SYSTÈME ET PROCÉDÉ D'ANALYSE QUANTITATIVE DE LA COMPOSITION ÉLÉMENTAIRE DE LA MATIÈRE PAR SPECTROSCOPIE DU PLASMA INDUIT PAR LASER (LIBS)**

SYSTEM UND VERFAHREN ZUR QUANTITATIVEN ANALYSE DER ELEMENTAREN STOFFZUSAMMENSETZUNG MITTELS LASER-INDUZIERTER PLASMA-SPEKTROSKOPIE (LIBS)

SYSTEM AND METHOD FOR THE QUANTITATIVE ANALYSIS OF THE ELEMENTARY COMPOSITION OF MATTER BY LASER-INDUCED PLASMA SPECTROSCOPY (LIBS)

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **06.11.2008 FR 0806203**

(43) Date de publication de la demande:
**03.08.2011 Bulletin 2011/31**

(73) Titulaire: **Centre National de la Recherche Scientifique (C.N.R.S.)**
**75794 Paris Cedex 16 (FR)**

(72) Inventeur: **HERMANN, Jörg**
**F-13008 Marseille (FR)**

(74) Mandataire: **Fonquernie, Sophie Benedicte**
**Marks & Clerk France**
**Immeuble Visium**
**22, avenue Aristide Briand**
**94117 Arcueil Cedex (FR)**

(56) Documents cités:
**DE-A1- 4 118 518    US-A- 5 715 053**
**US-B1- 6 657 721**

• D Bulajic ET AL: "A procedure for correcting self-absorption in calibration free-laser induced breakdown spectroscopy", Spectrochimica Acta Part B: Atomic Spectroscopy, vol. 57, no. 2, 1 February 2002 (2002-02-01), pages 339-353, XP055141049, ISSN: 0584-8547, DOI: 10.1016/S0584-8547(01)00398-6
• HERMANN J ET AL: "Diagnostics of the early phase of an ultraviolet laser induced plasma by spectral line analysis considering self-absorption", JOURNAL OF APPLIED PHYSICS, AMERICAN INSTITUTE OF PHYSICS, US, vol. 83, no. 2, 15 January 1998 (1998-01-15), pages 691-696, XP012044503, ISSN: 0021-8979, DOI: 10.1063/1.366639

## Description

La présente invention concerne un système et un procédé d'analyse quantitative de la matière par spectroscopie du plasma induit par laser (LIBS, ou encore « Laser-Induced Breakdown Spectroscopy » en langue anglo-saxonne).

## DOMAINE TECHNIQUE

La présente invention se rapporte au domaine de la mesure instantanée par technique LIBS, sans contact ou à distance de la composition élémentaire d'une matière sous forme solide, liquide, gazeuse ou sous forme d'aérosols. Ce type de mesure peut être utilisé dans de nombreux domaines d'applications, comme le tri de déchets, la mesure de polluants dans l'air ou dans l'eau, l'analyse de matériaux dans des environnements hostiles tel le nucléaire, la détection d'explosifs ou d'autres matériaux dangereux, l'exploration interplanétaires, etc.

Elle se rapporte plus particulièrement à un procédé d'analyse quantitative de la composition élémentaire de la matière à partir d'un échantillon comportant une pluralité d'éléments aptes à générer un plasma et à émettre un rayonnement suivant une direction d'observation.

Elle se rapporte également à un système pour l'analyse quantitative de la composition élémentaire de la matière à partir d'un échantillon comportant une pluralité d'éléments par des mesures de spectroscopie du plasma induit par laser.

## ETAT DE LA TECHNIQUE ANTERIEURE

Un tel procédé et un tel système sont décrits, par exemple, dans un article publié en anglais par D. Bulajic, M. Corsi, G. Cristoforetti, S. Legnaioli, V. Palleschi, A. Salvetti, E. Tognoni et intitulé « A procédure for correcting self-absorption in calibration free-laser induced breakdown spectroscopy », Spectrochimica Acta Part B : Atomic Spectroscopy, 57, (2002), pages 339-353. Ils mettent en oeuvre une analyse par

méthode LIBS. Ce type d'analyse consiste à focaliser un faisceau laser impulsionnel sur la surface d'un échantillon de matériaux solides, liquides (ou dans un gaz), afin de vaporiser la matière et la transformer en un plasma. Le spectre d'émission du plasma est ensuite analysé afin de déterminer sa composition chimique qui est corrélée à celle de la matière avant l'irradiation. Pour cela, cette analyse se fonde sur des mesures d'intensités relatives des raies spectrales émises par les atomes, ions ou molécules de plasma.

La détermination de la composition élémentaire de l'échantillon à partir de ces mesures d'intensités relatives des raies spectrales nécessite toutefois un étalonnage préalable. Celui-ci consiste à mesurer les rapports d'intensité entre des raies atomiques (ou ioniques) pour des matériaux de composition connue et similaire à celle des matériaux de l'échantillon inconnu à analyser. Dans le cas par exemple de la mesure de concentration du carbone dans un acier, celle-ci est calibrée par la mesure du rapport d'intensité entre une raie de carbone et une raie de fer pour plusieurs aciers comportant du carbone dans des concentrations différentes. La courbe d'étalonnage obtenue permet ensuite de déterminer la concentration du carbone dans l'échantillon.

Une solution de mesure de concentration par méthode LIBS mettant en oeuvre un étalonnage préalable est décrite dans le document de brevet WO 97/15811 qui concerne un procédé pour déterminer la concentration d'espèces atomiques dans un échantillon. Pour cela, les intensités d'au moins deux raies spectrales émises par des atomes ou ions sont mesurées pour chaque élément de l'échantillon, ce dernier étant excité par un rayonnement laser impulsionnel de sorte à générer un plasma et émettre un rayonnement. Un certain intervalle de temps est requis afin de considérer le plasma en équilibre thermodynamique local et de pouvoir ensuite procéder à une mesure instantanée de la température du plasma. La concentration des espèces atomiques à déterminer est ensuite déduite d'intensités d'émission connues pour l'espèce atomique souhaitée dans une concentration prédéterminée à la température de mesure. Ces intensités d'émission connues sont déterminées lors d'un étalonnage préalable.

Ce type de solution, utilisant un étalonnage préalable, pose principalement deux problèmes. D'une part, l'étalonnage doit se faire obligatoirement dans les mêmes conditions expérimentales que la mesure sur l'échantillon inconnu, ce qui implique de lourdes contraintes expérimentales. Ces contraintes sont parfois mêmes impossibles à lever, comme c'est le cas de la dépendance des propriétés du plasma vis-à-vis de l'humidité du sol, cette dernière étant en général inconnue et donc impossible à reproduire. D'autre part, l'étalonnage impose de fournir autant de courbes d'étalonnage qu'il y a d'éléments différents dans l'échantillon inconnu. Ainsi, dans le cas d'un échantillon comprenant un nombre élevé d'éléments, le nombre de courbes d'étalonnage à réaliser devient trop important.

Pour s'affranchir de l'étalonnage préalable lors d'une mesure des concentrations élémentaires par la technique LIBS à partir de mesures d'intensité de raies spectrales, une solution est décrite dans le document de brevet US 6,657,721. Cette solution est basée sur le calcul de la composition d'un plasma en équilibre thermodynamique local (ETL) et du coefficient d'émission des raies spectrales sélectionnées. Elle est également fondée sur un certain nombre d'hypothèses parmi lesquelles : le plasma est optiquement mince, uniforme, complètement atomisé et en équilibre thermodynamique local, et la stoechiométrie est conservée lors de la transformation de la matière en plasma. Pour réaliser cette mesure, les atomes composant l'échantillon sont excités et partiellement ionisés par un rayonnement laser de sorte à générer un plasma. Le rayonnement émis par le plasma est ensuite analysé sans étalonnage préalable, en procédant à une mesure de l'intensité des raies spectrales émises par des atomes (ou ions) de chaque élément, à l'obtention de la température de plasma, à déterminer la concentration de toutes les espèces composant un élément en la multipliant par un facteur de proportion, à calculer la concentration de chaque élément comme la somme des concentrations des espèces correspondantes et à normaliser chaque concentration par rapport à la somme de toutes les concentrations, afin d'éliminer le facteur de proportion. Ce procédé rend ainsi possible déterminer les concentrations des éléments composant la matière sans devoir procéder préalablement à un étalonnage ou bénéficier d'échantillons de référence. Par ailleurs, les coûts et durées de chaque mesure sont diminués puisque le procédé est suffisant à lui seul.

Néanmoins, cette solution comporte un certain nombre d'inconvénients. En particulier, l'hypothèse selon laquelle le plasma est optiquement mince et uniforme conduit à des imprécisions significatives sur le résultat de la mesure. En effet, l'hypothèse de plasma optiquement mince n'est jamais satisfaite puisqu'en contradiction avec celle d'équilibre thermodynamique local. Cette dernière implique une densité élevée de plasma, ce qui est bien le cas dans les plasmas LIBS, mais il est connu qu'une densité élevée favorise l'absorption par le plasma. Ainsi un plasma en équilibre thermodynamique local ne peut être considéré comme optiquement mince et l'auto-absorption des raies spectrales doit être considérée. De plus, un plasma produit par laser impulsionnel impose des gradients de température et de densité importants, ce qui est contraire à une hypothèse d'uniformité où on considérerait que les variations spatio-temporelles de la température et de la densité du plasma peuvent être négligées. Dans le cas par exemple d'un plasma d'ablation laser, celui-ci présente un coeur chaud et dense et une zone périphérique de température de densité plus faibles. Les raies spectrales des atomes de fort et de faible potentiels d'ionisation sont alors émises respectivement par le coeur et par la périphérie du plasma. La provenance de l'émission spectrale de zones de températures différentes fausse évidemment la mesure. Par conséquent, seulement l'analyse de matière composée d'atomes de potentiel d'ionisation similaire peut se faire sans tenir compte des variations spatiales du plasma (brevet US 6,657,721).

Par ailleurs, les codes numériques proposés pour tenir compte de l'auto-absorption des raies spectrales et de la non-uniformité spatiale du plasma impliquent des temps de calcul significativement longs, qui empêcheraient de fait toute mesure en temps réel.

Ainsi aucune solution de l'état de la technique ne permet de réaliser des mesures de concentration de composants atomiques par spectroscopie LIBS qui puissent ne pas nécessiter d'étalonnage préalable, tenir compte de manière précise de l'auto-absorption des raies et de la non-uniformité spatiale du plasma, et fournir un temps de calcul apte à fournir une mesure en temps réel.

## OBJET DE L'INVENTION

Le but de la présente invention est de remédier à ce problème technique, en permettant de réaliser une mesure de concentration sans étalonnage préalable et avec des temps de calcul suffisamment courts, sans pour autant se limiter à des hypothèses susceptibles d'engendrer des erreurs de mesure. Elle se fonde pour cela sur le calcul du coefficient d'absorption du plasma afin de prendre en compte le fait que le plasma n'est pas optiquement mince, ainsi que le calcul rapide de la luminance spectrale. La rapidité du calcul de la luminance est obtenue par l'utilisation de solutions analytiques de l'équation du transport de rayonnement (solutions pour une, deux ou plusieurs zones uniformes du plasma). Une itération rapide portant sur la comparaison entre spectres mesuré et calculé permet d'obtenir avec une grande rapidité la composition chimique du plasma.

L'approche de la solution a consisté à étudier comment obtenir, à partir des procédés de mesure de concentration par spectroscopie LIBS sans étalonnage préalable, une vitesse de calcul rapide en fonction des hypothèses émises sur le plasma. Il est alors apparu qu'en combinant une prise en compte de l'absorption du plasma et en utilisant un ajustement itératif des paramètres du plasma (largeur, température et densité électronique du plasma, concentrations relatives des éléments du plasma), il était possible d'obtenir des mesures précises de concentration pour un temps de calcul rapide.

Dans ce but, l'invention a pour objet un procédé d'analyse quantitative de la composition élémentaire de la matière à partir d'un échantillon comportant une pluralité d'éléments aptes à générer un plasma et à émettre un rayonnement. Chaque élément comporte une pluralité de constituants. Le procédé comprend :

- une étape d'identification des raies spectrales d'intérêt parmi celles émises par les constituants de chaque élément de l'échantillon,
- une étape de mesure des intensités des raies spectrales d'intérêt,
- une étape d'estimation de la température du plasma,
- une étape d'estimation de la densité électronique du plasma,
- une étape d'estimation de la largeur du plasma dans la direction d'observation,
- une étape de calcul de la composition chimique du plasma à partir des valeurs de température, de densité électronique

et des valeurs relatives des concentrations élémentaires de chaque élément de l'échantillon.

Ce procédé comporte également une étape de calcul du coefficient d'absorption $\alpha(\lambda)$ du plasma au niveau des raies spectrales d'intérêt, une étape de calcul de la luminance spectrale du plasma et une étape de comparaison de l'intensité et la forme du spectre ainsi calculé avec celles du spectre mesuré. Les étapes de calcul de composition chimique, de calcul de coefficient d'absorption, de calcul de luminance spectrale et de comparaison sont répétées de manière itérative. Les valeurs de la température du plasma, de la densité électronique du plasma, de la largeur du plasma et des concentrations élémentaires sont ajustées à chaque itération. Les itérations se poursuivent jusqu'à l'obtention d'une différence entre l'intensité et la forme du spectre calculé et celles du spectre mesuré qui soit inférieure ou égale en valeur absolue à une valeur seuil prédéterminée.

Ce procédé combine ainsi une prise en compte de l'absorption du plasma pour tenir compte de la possibilité que le plasma ne soit pas optiquement mince, et une itération, de manière à converger rapidement vers la modélisation du plasma la plus adéquate en fonction de la précision souhaitée sur la mesure. Cela rend ainsi possible à la fois l'obtention de mesures précises de concentration et un temps de calcul rapide.

L'invention se fonde également sur une prise en compte des gradients de température et de densités en divisant le plasma en un ensemble de zones uniformes, chaque zone présentant une température et une densité électronique différente. La précision sur la mesure sera d'autant plus grande que le nombre de zones considérées sera élevé.

Ainsi, de préférence, le procédé comporte également une étape de division du plasma en un nombre croissant de zones. Cette étape de division est conditionnée par l'obtention d'un minimum de la différence entre l'intensité et la forme du spectre calculé et celles du spectre mesuré, ce minimum étant supérieur en valeur absolue à la valeur seuil prédéterminée.

Le calcul est tout d'abord effectué pour une seule zone représentant un plasma uniforme. Si, après l'optimisation des paramètres, la différence entre l'intensité et la forme spectrale des raies d'intérêt calculées et celles du spectre mesuré est supérieure en valeur absolue à une valeur seuil prédéterminée, le plasma est divisé en un nombre croissant de zones suivant la direction d'observation, chacune caractérisée par des valeurs différentes de température et de densité électronique. L'itération se fait maintenant sur l'ajustement de n+6 (au lieu de n+3) paramètres, les concentrations des n éléments et les valeurs de température et de densité électronique et de largeur de chaque zone. De ce fait, la comparaison entre spectres calculé et mesuré se fait sur au moins n+6 raies d'intérêt. D'autres zones peuvent être encore rajoutées si le résultat n'est toujours pas satisfaisant.

Cette variante du procédé combine avantageusement une division du plasma en deux ou plusieurs zones uniformes pour tenir compte de la possibilité que le plasma ne soit pas uniforme, une prise en compte de l'absorption du plasma pour tenir compte de la possibilité que le plasma ne soit pas optiquement mince, ainsi qu'une itération, de manière à converger rapidement vers la modélisation du plasma la plus adéquate en fonction de la précision souhaitée sur la mesure. Cela permet à la fois d'obtenir des mesures précises de concentration et un temps de calcul rapide.

On entendra dans le présent brevet par constituant d'un élément tout atome, ion et molécule compris dans cet élément.

Préférentiellement, la luminance spectrale du plasma est calculée en utilisant des solutions analytiques de l'équation de transfert de rayonnement. Ce type de solution permet de calculer rapidement la luminance du plasma en tenant compte de son épaisseur optique, ce qui offre des mesures de concentration d'autant plus précises et rapides.

Selon un mode préférentiel de mise en oeuvre de l'étape d'estimation de la température, celle-ci est estimée à partir du rapport d'intensité des raies spectrales émises par au moins un constituant d'un élément de l'échantillon.

Selon un mode préférentiel de mise en oeuvre de l'étape d'estimation de la densité électronique, celle-ci est estimée à partir d'une mesure d'élargissement Stark d'au moins une raie spectrale.

Selon un mode préférentiel de mise en oeuvre de l'étape d'estimation de la largeur du plasma dans la direction d'observation, celle-ci est estimée à partir d'une mesure d'intensité ou de largeur de deux ou plusieurs raies spectrales auto-absorbées du même multiplet.

De manière avantageuse, l'itération commence avec un plasma uniforme correspondant à une seule zone, ce qui permet d'arrêter rapidement les calculs s'il s'avère qu'une itération avec une seule zone uniforme est suffisante.

L'invention concerne également un système pour l'analyse quantitative de la composition élémentaire de la matière à partir d'un échantillon comportant une pluralité d'éléments par des mesures de spectroscopie du plasma induit par laser. Chaque élément comporte une pluralité de constituants. Ce système comprend :

- une source de rayonnement laser apte à chauffer la matière de manière à générer un plasma émettant un rayonnement,
- des moyens optiques agencés pour diriger et focaliser le rayonnement issu de la source laser vers l'échantillon,
- un système optique pour recevoir le rayonnement émis par le plasma généré par ledit échantillon,
- un système d'analyse spectroscopique de signaux optiques,
- un dispositif informatique comprenant :

∘ un moyen pour identifier des raies spectrales d'intérêt parmi celles émises par les constituants de chaque élément de l'échantillon,

∘ un moyen pour obtenir les intensités des raies spectrales d'intérêt,

∘ un moyen pour obtenir la température du plasma,

∘ un moyen pour obtenir la densité électronique du plasma,

∘ un moyen pour obtenir la largeur du plasma dans la direction d'observation,

∘ un moyen pour calculer la composition chimique du plasma à partir des valeurs de température, de densité électronique, et des valeurs relatives des concentrations élémentaires de chaque élément de l'échantillon.

Dans ce système, le dispositif informatique comprend également un moyen pour calculer le coefficient d'absorption du plasma en fonction de la longueur d'onde dans les zones spectrales sélectionnées pour l'observation des raies d'intérêt, un moyen pour calculer la luminance spectrale du plasma et un moyen pour comparer l'intensité et la forme du spectre ainsi calculé avec celles du spectre mesuré par le système d'analyse spectroscopique. Les moyens pour calculer la composition chimique du plasma, pour calculer le coefficient d'absorption, pour calculer la luminance spectrale et pour comparer sont agencés de sorte à exécuter les calculs et comparaisons de manière successive et itérative. Les valeurs de la température du plasma, de la densité électronique du plasma, de la largeur du plasma et des concentrations élémentaires sont ajustées à chaque itération. Les itérations se poursuivent jusqu'à l'obtention d'une différence entre l'intensité et la forme du spectre calculé et celles du spectre mesuré qui soit inférieure ou égale en valeur absolue à une valeur seuil prédéterminée.

De préférence, le dispositif informatique comprend également un moyen pour diviser le plasma en un nombre croissant de zones et un moyen pour comparer la différence entre l'intensité et la forme du spectre calculé et celles du spectre mesuré par le système d'analyse spectroscopique à la valeur seuil prédéterminée. Le moyen de division est agencé pour exécuter cette division à condition que la différence obtenue entre l'intensité et la forme du spectre calculé et celles du spectre mesuré soit un minimum est que ledit minimum soit supérieur en valeur absolue à la valeur seuil prédéterminée.

## BRÈVE DESCRIPTION DES DESSINS

L'invention sera mieux comprise à la lecture de la description détaillée d'un exemple non limitatif de réalisation, accompagnée de figures représentant respectivement :

- la figure 1, un schéma d'un système pour l'analyse quantitative de la composition élémentaire de la matière selon l'invention,
- la figure 2, un schéma d'un procédé d'analyse quantitative de la composition élémentaire de la matière selon l'invention,
- les figures 3 et 4 des schémas des algorithmes de calcul respectivement d'équilibre d'ionisation et d'équilibre chimique permettant le calcul de la composition chimique du plasma selon l'invention, et
- les figures 5A et 5B des schémas illustrant l'étape de division du plasma en plusieurs zones uniformes dans la direction d'observation.

## EXPOSÉ DÉTAILLÉ DE MODES DE RÉALISATION PARTICULIERS

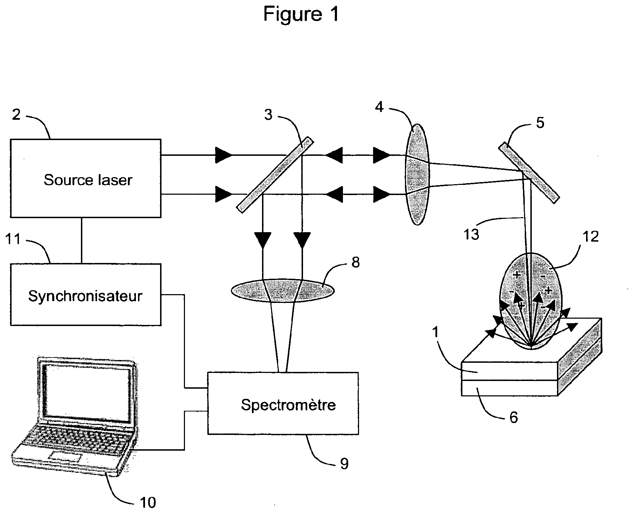

En référence à la figure 1, un système pour l'analyse quantitative de la composition élémentaire de la matière selon l'invention comprend en outre une source de rayonnement laser 2, des moyens de séparation optique 3, des moyens optiques 4 et 5, un support 6, un système optique 8, un système d'analyse spectroscopique calibré 9, un dispositif informatique 10 et un synchronisateur 11.

La source 2 émet un rayonnement laser impulsionnel qui traverse la lame séparatrice 3 avant d'être focalisé sur la surface de l'échantillon 1 (ou dans le gaz) via une lentille 4 et un miroir 5 orienté de manière adéquate. Le rayonnement laser chauffe la matière sur la surface de l'échantillon 1, ce qui génère un plasma 12 et provoque l'émission d'un rayonnement 13. Une partie du rayonnement 13 émis par le plasma est récoltée à l'aide des moyens optiques 4 et 5, puis est réfléchie par la lame séparatrice 3 et enfin collecté par le système optique 8 vers le spectromètre 9.

Il convient de noter que l'utilisation d'un support 6 - ou porte échantillon - n'est nécessaire que dans le cas d'un matériau liquide ou solide. Dans le cas d'un gaz, il n'est pas nécessaire de disposer d'un porte-échantillon et la focalisation du faisceau peut s'effectuer directement dans le gaz.

Le spectromètre 9 réalise la dispersion spectrale et l'acquisition du rayonnement plasma 13 récolté. Il comprend pour cela un détecteur de photons vectoriel ou matriciel. Il est relié au dispositif informatique 10 ainsi qu'au synchronisateur 11, ce dernier étant également relié à la source laser 2 de sorte à assurer la synchronisation de l'impulsion laser issue de la source 2 et l'acquisition des signaux optiques correspondants par le spectromètre 9. Ces signaux sont ainsi transmis à l'ordinateur 10 qui comporte un microprocesseur permettant, d'une part, de piloter le système et, d'autre part, d'exécuter un logiciel informatique dédié à l'analyse des données par la mise en oeuvre des étapes successives du procédé selon l'invention.

Le spectromètre 9 est préalablement étalonné en longueur d'onde et en intensité. L'étalonnage en intensité, consistant à déterminer la réponse de l'appareil en fonction de la longueur d'onde, est réalisé à l'aide d'une source de rayonnement dont la luminance spectrale est connue, par exemple une lampe de tungstène ou une lampe de deutérium.

Le dispositif informatique 10 comprend un ensemble de moyens permettant de faire les différentes estimations, calculs, comparaison, ajustements et itérations nécessaires à l'exécution de procédé d'analyse selon l'invention. Ces moyens se présentent sous la forme d'un programme informatique associé à des moyens d'exécution de ce programme.

Selon un mode particulier de réalisation, le système comprend également une base de données permettant le calcul des fonctions de partition et le calcul du coefficient d'absorption en fonction de la longueur d'onde pour les zones spectrales sélectionnées pour l'analyse.

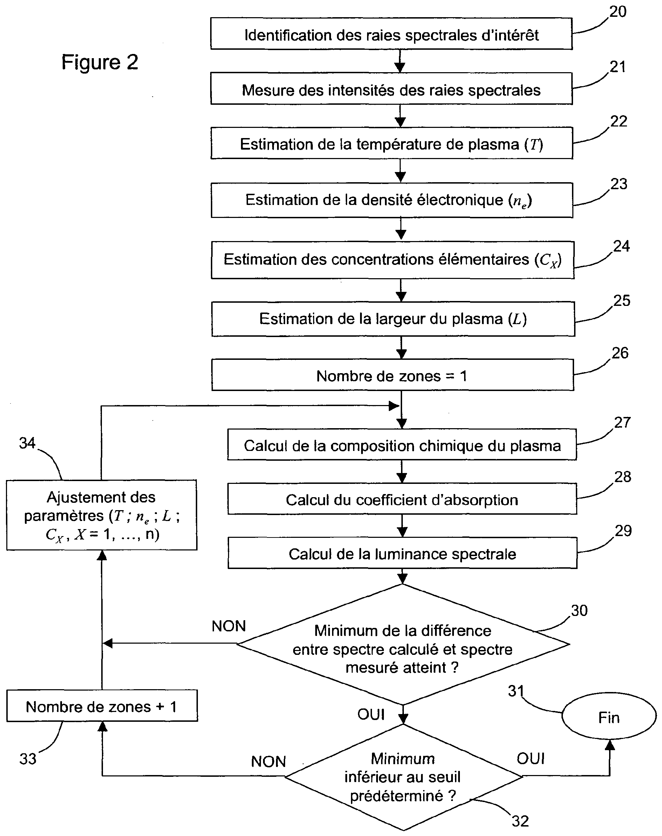

On décrit maintenant un mode de réalisation du procédé de mesure des concentrations élémentaires selon l'invention en référence à la figure 2.

Ce procédé utilise les données du rayonnement émis par le plasma 12 et acquises par le spectromètre 9. Il comporte une première étape d'identification 20 des raies spectrales sur le spectre mesuré. Cette identification peut être effectuée à partir d'une base de données complète contenant toutes les raies situées dans zones spectrales sélectionnées pour l'analyse. Ces zones ont été définies lors d'une étape préalable à la mesure spectroscopique, où le choix des raies d'intérêt est opéré. L'identification peut alors être réalisée en comparant le spectre théorique avec le spectre expérimental.

Il est ainsi obtenu individuellement les raies spectrales et l'on mesure alors les intensités de celles-ci lors de l'étape 21. Il peut être également mesuré la longueur d'onde au centre de chaque raie ainsi que l'intégrale de chaque raie.

On procède ensuite à une première estimation 22 de la température ($T$) du plasma à partir des rapports d'intensité des raies appropriées, puis à une première estimation 23 de la densité électronique ($n_e$) du plasma par mesure de l'élargissement Stark de raie. Dans le cas où une mesure de l'élargissement Stark n'est pas possible, la densité électronique peut être déduite du rapport d'intensité de raies émises par un atome neutre et un ion du même élément.

Une fois obtenues ces deux valeurs caractéristiques du plasma 12, il est procédé à l'estimation 24 des n valeurs relatives des concentrations ($C_X$) des différents éléments de l'échantillon 1. Il est également procédé à l'estimation 25 de la largeur ($L$) du plasma 12 dans la direction d'observation. Il convient de noter ici que ces estimations peuvent être arbitraires, dans la mesure où elles seront ensuite ajustées au cours des itérations à venir.

L'itération peut alors commencer par une étape d'initialisation 26 consistant à considérer que le nombre de zones uniformes du plasma est égal à 1, ce qui revient à émettre l'hypothèse selon laquelle le plasma est spatialement uniforme. L'itération consiste alors en la succession des étapes de calcul 27 de la composition chimique du plasma, de calcul 28 du coefficient d'absorption en fonction de la longueur d'onde pour les zones spectrales des raies d'intérêt, de calcul 29 de la luminance spectrale pour les zones spectrales des raies d'intérêt et de comparaison 30 du spectre - calculé à partir des étapes de calcul 27 à 29 (pour les n + 3 paramètres qui sont les n concentrations élémentaires, la température, la densité électronique et l'épaisseur du plasma dans la direction d'observation) avec le spectre mesuré. L'itération commence avec les valeurs estimées de $T$ et $n_e$ et les n concentrations et l'épaisseur $L$ estimés ou choisis arbitrairement.

L'étape 27 consiste à calculer la composition chimique du plasma à partir des valeurs de la température ($T$) du plasma et de la densité électronique ($n_e$), ainsi que de valeurs relatives des concentrations ($C_X$) des n éléments présents dans l'échantillon à analyser. La composition d'un plasma en équilibre thermodynamique local est en effet déterminée par sa température ($T$) et les densités atomiques des éléments. Dans la gamme de température typique des plasmas LIBS, supérieure à 5000 K, la présence de molécules polyatomiques peut être négligée. La densité atomique d'un élément $X$ est donnée par :

Equation 1 :

$$n_X = n_X^{\#} + \sum_{X=1, X \neq Y}^{N} \sum_{z=0}^{1} n_{XY}^{z}$$

Où $n_X^{\#}$ est la densité d'atomes qui n'ont pas subi de réactions chimiques avec d'autres éléments, les $n_{XY}^{z}$ sont les molécules diatomiques de charge $z$ formées par réactions chimiques avec d'autres éléments $Y$. Nous avons :

Equation 2 :

$$n_X^{\#} = \sum_{z=0}^{m} n_X^{z} + 2\sum_{z=0}^{1} n_{X_2}^{z} \quad , \quad X = 1,...,N$$

Où $n_X^z$ et $n_{X_2}^z$ sont les espèces atomiques et moléculaires homonucléaires de charge $z$. Le calcul tient compte des ions atomiques d'une charge maximale $m = 3$ et des ions moléculaires simplement ionisés.

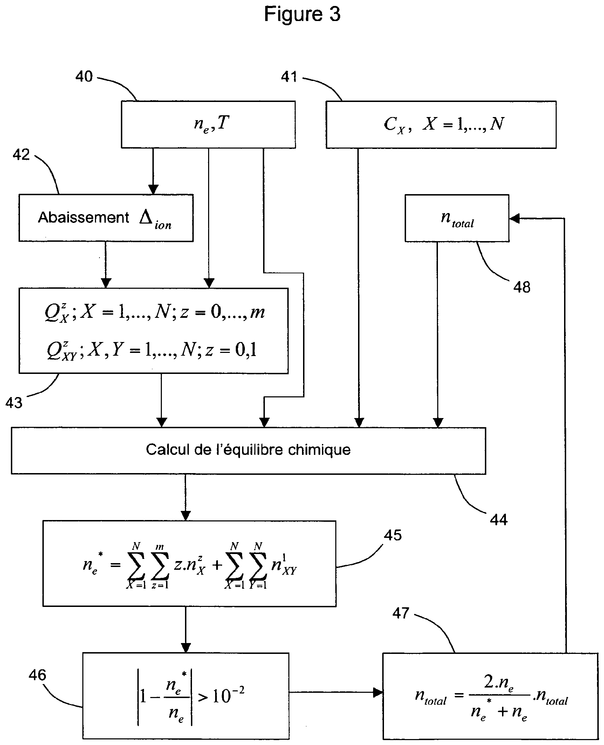

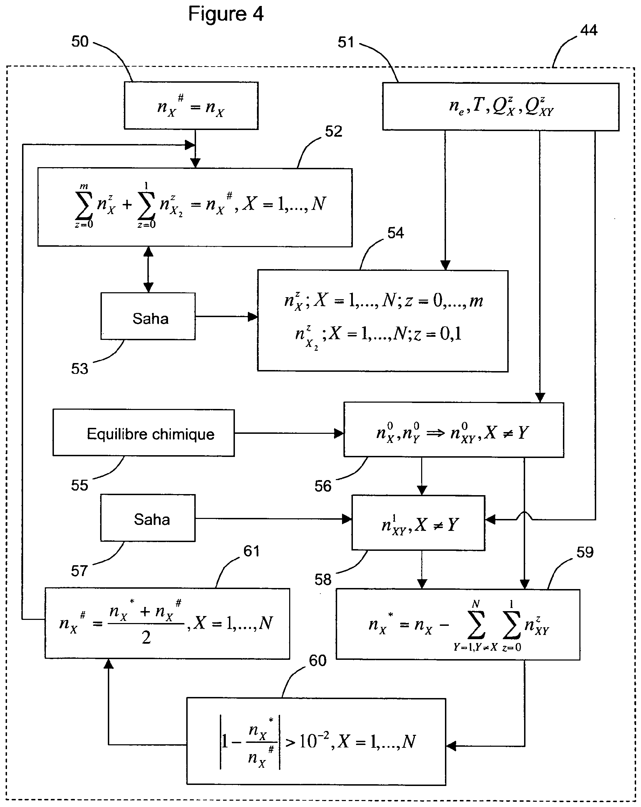

La composition du plasma en équilibre thermodynamique local est calculée suivant l'algorithme de calcul présenté schématiquement sur les figures 3 et 4. Une boucle d'itération principale (figure 3) est utilisée pour calculer l'équilibre d'ionisation. Une boucle d'itération secondaire (figure 4) à l'intérieure de la boucle d'itération principale (voir figure 3) est utilisée pour calculer l'équilibre chimique.

Le calcul est effectué à partir des valeurs de densité électronique $n_e$ et de température $T$ (40) ainsi que des concentrations relatives des éléments $C_X$ (41). Le calcul démarre avec une densité atomique totale (48) $n_{total} = n_e$. Tout d'abord, l'abaissement du potentiel d'ionisation $\Delta_{ion}$ est déterminé (42). Ensuite, les fonctions de partition $Q$ de toutes les espèces de plasma sont calculées (43). Les fonctions de partition des molécules diatomiques sont déterminées en utilisant :

Equation 3 :

$$Q_{XY}^z = \sum_n (2-\delta_\Lambda).(2S+1).e^{-\frac{E(n)}{k.T}}.\sum_{v=0}^{v_{max}} e^{-\frac{G(v)}{k.T}}.\sum_{J=0}^{J_{max}} g_N.(2J+1).e^{-\frac{F(J)}{k.T}}$$

Où $n$ est le nombre du niveau électronique, $E(n)$ son énergie, $\delta_\Lambda$ le facteur du doublement $\Lambda$ et $S$ le nombre quantique du spin. $v$ et $J$ sont respectivement les nombres quantiques de niveaux vibrationnels et rotationnels, $g_N$ est le poids statistique nucléaire. L'énergie vibrationnelle $G(v)$ et l'énergie rotationnelle $F(J)$ sont calculées en utilisant les formules adéquates. En accord avec la gamme de température d'intérêt ($T < 2. 10^4$ K), la somme sur les niveaux rotationnels a été limitée à $J_{max}$=200. Le nombre quantique maximum $v_{max}$ est déterminé pour chaque niveau électronique à partir des constantes moléculaires.

Après le calcul des fonctions de partition, la composition chimique (44) est déterminée suivant le schéma de calcul illustré par la figure 4.

Le calcul utilise les paramètres $n_e$, $T$, $Q_X^z$, $Q_{XY}^z$ (51). Le calcul démarre en négligeant les réactions chimiques entre différents éléments en mettant $\sum_{z=0}^{1} n_{XY}^z = 0$. D'après l'équation 1, nous avons initialement $n_X = n_X^{\#}$ (50). Pour chaque élément, les densités des atomes, ions et molécules qui ne participent pas à des réactions chimiques avec d'autres éléments (54), sont calculés en utilisant les équations de Saha adéquates (53) en respectant la loi de conservation de la masse (52). Ensuite les densités de molécules diatomiques issues de réactions chimiques entre différents éléments (56) sont déterminées en utilisant la loi d'action de masse pour l'équilibre chimique (55) :

Equation 4 :

$$\frac{n_X^0.n_Y^0}{n_{XY}^0} = \frac{(2\pi\mu kT)^{3/2}}{h^3}.\frac{Q_X^0.Q_Y^0}{Q_{XY}^0}.e^{-\frac{D_0}{k.T}}$$

Où $n_X^0$ et $n_Y^0$ sont respectivement les densités d'atomes neutres des éléments $X$ et $Y$, $n_{XY}^0$ est la densité de molécules diatomiques issues de la réaction chimique entre les deux éléments. $Q_X^0$, $Q_Y^0$ et $Q_{XY}^0$ sont les fonctions de partition correspondantes. $D_0$ est l'énergie de dissociation de la molécule $XY$ dans l'état fondamental, $h$ la constante de

Planck et $\mu = \dfrac{m_X . m_Y}{m_X + m_Y}$ la masse réduite calculée à partir des masses atomiques $m_X$ et $m_Y$ des deux éléments. Les densités de molécules ionisées $n_{XY}^I$ (58) sont calculées en utilisant les équations de Saha correspondantes (57). Après la détermination des densités des produits de réactions chimiques, les valeurs $n_X^*$ sont déterminées en enlevant les $n_{X \neq Y}^z$ des $n_X$ suivant l'équation 1 (59). Si la différence entre $n_X^\#$ et $n_X^*$ est trop grande pour au moins un élément (60), le calcul est répété avec la valeur moyenne de $n_X^\#$ et $n_X^*$ (61). Après le calcul de la composition chimique, la densité électronique entre $n_e^*$ est déterminée à partir de l'équation de neutralité (45) comme indiqué sur la figure 3. Si l'écart entre $n_e$ et $n_e^*$ est trop grand (46), le calcul est répété avec une valeur $n_{total}$ appropriée (47).

L'étape 28 consiste à calculer le coefficient d'absorption du plasma pour toutes les raies situées dans les zones spectrales sélectionnées (autour des raies d'intérêt), en fonction de la longueur d'onde, en utilisant :

Equation 5 :

$$\alpha(\lambda) = \pi . r_0 . \lambda^2 . f_{lu} . n_l . P(\lambda) . \left[ 1 - e^{-\frac{h.c}{\lambda . k . T}} \right]$$

Où $r_0$ est le rayon classique de l'électron, c la vitesse de la lumière, $f_{lu}$ est $n_l$ sont respectivement la force d'oscillateur d'absorption et la densité de population du niveau inférieur de la transition. Le profil normalisé $P(\lambda)$ est calculé en tenant compte des effets Doppler et Stark qui sont les mécanismes prépondérants de l'élargissement de raies spectrales dans les plasmas LIBS fortement ionisés. En fonction des valeurs relatives des largeurs Doppler et Stark, la forme spectrale est approximée par une fonction Gaussienne, Lorentzienne ou par un profil de Voigt. La largeur Doppler est calculée conformément à la température du plasma et la masse atomique de l'espèce émettrice. La largeur et le déplacement Stark sont déterminés pour chaque raie.

L'étape 29 consiste à calculer la luminance spectrale du plasma en utilisant des solutions analytiques de l'équation de transfert du rayonnement. Pour le cas d'une distribution spatiale uniforme, la luminance du plasma est donnée par :

Equation 6 :

$$I(\lambda) = U(\lambda) . (1 - e^{-\alpha(\lambda).L})$$

Où $L$ est la largeur du plasma dans la direction d'observation, $U(\lambda)$ est une luminance d'un corps noir.

La luminance spectrale $I(\lambda)$ est calculée pour toute les plages spectrales sélectionnées contenant les raies d'intérêt. Pour comparer le spectre calculé au spectre mesuré par le spectromètre 9, l'intensité du spectre calculé est ajustée à celle du spectre mesuré en multipliant $I(\lambda)$ par un facteur correctif qui est déterminé à partir d'une raie de référence.

La comparaison (30) se fait sur toutes les plages spectrales sélectionnées en ajustant les n+3 paramètres ($T$, $n_e$, $L$ et les n concentrations relatives $C_x$) afin de déterminer si la composition du plasma permet de générer le spectre mesuré. Lors de cette comparaison (30), on compare à la fois l'intensité et la forme des raies spectrales calculées et mesurées. Si cette différence est inférieure à un seuil prédéterminé, le procédé est terminé (31) et l'on a déduit la composition élémentaire du plasma avec une précision suffisante, cette composition étant égale à celle de l'échantillon. On entendra ici par seuil prédéterminé un ensemble de critères formé par plusieurs seuils de sorte à tenir à la fois compte de l'intensité et de la forme des spectre calculé et mesuré.

Si, après optimisation des n+3 paramètres, cette différence est supérieure au seuil prédéterminé, il est nécessaire de procéder à une augmentation du nombre de zones du plasma. A chaque nouvelle itération, il est procédé à l'ajustement 34 des n+3 paramètres : la température de plasma, la densité électronique de plasma, les concentrations élémentaires de chaque élément de l'échantillon ainsi que la largeur de plasma dans la direction d'observation. Il est ensuite recommencé les étapes de calcul 27 à 29 puis l'étape de comparaison avec des paramètres ajustés. Ces étapes itératives se répètent pour les zones spectrales contenant des raies d'intérêt jusqu'à l'obtention du seuil mentionné plus haut.

On décrit maintenant l'étape d'ajustement 34. Comme l'auto-absorption peut conduire à une diminution de l'intensité des raies (dont l'importance diffère d'une raie à une autre), le rapport d'intensité des raies choisies pour la détermination de la température est examiné. Si le rapport d'intensité du spectre théorique est différent de celui du spectre mesuré, la température est ajustée afin de minimiser l'écart du rapport d'intensité. De façon similaire, comme l'auto-absorption peut conduire à l'élargissement des raies, la largeur de la raie choisie pour la mesure de $n_e$ est examinée. Si il existe en écart entre largeur calculée et largeur mesurée, $n_e$ est ajusté afin de minimiser l'écart entre les deux largeurs. Ensuite, les intensités des raies choisies pour la mesure des concentrations relatives $C_X$ des n éléments sont examinées l'une après l'autre. S'il existe un écart entre l'intensité calculée et intensité mesurée, la concentration relative de l'élément correspondant est ajustée par rapport à l'élément majoritaire qui sert de référence. Par la suite, la largeur du plasma $L$ est ajustée à partir du rapport d'intensité de raies du même multiplet ayant des probabilités d'auto-absorption différentes.

Après avoir ajusté $L$, on procède de nouveau à une comparaison du rapport d'intensité des raies utilisées pour la détermination de $T$, à une comparaison de la largeur de la raie choisie pour la détermination de $n_e$, et à la comparaison des intensités des raies choisies pour la déterminations des n concentrations élémentaires. Comme l'ajustement de la concentration du constituant choisi pour la détermination de $L$ change l'effet d'auto-absorption des raies, la largeur du plasma est ajustée de nouveau pour obtenir le rapport d'intensité des raies choisies à cet effet. On procède ainsi à l'ajustement des paramètres jusqu'à ce que l'écart entre spectres calculé et mesuré soit minimisé.

Dans le mode de réalisation préféré de l'invention, les paramètres ajustés lors de l'itération sont optimisés jusqu'à obtenir (étape 30) un minimum de la différence entre l'intensité et la forme des raies spectrales identifiées calculées et mesurées. Lorsque ce minimum est atteint (étape 32), on le compare avec la valeur seuil prédéterminée. Si le minimum y est inférieur ou égal, le procédé est terminé (étape 31). Sinon, l'optimisation des paramètres n'est plus utile. Il est alors procédé à une étape d'augmentation (33) du nombre de zones du plasma 12. On améliore ainsi la précision du calcul en rajoutant une ou deux (selon la géométrie d'observation) zones de plasma afin de tenir compte de la non-uniformité du plasma. On peut ensuite reprendre les itérations avec ce nouveau plasma, en cherchant à nouveau un minimum de la différence entre l'intensité et la forme des raies spectrales identifiées calculées et mesurées, et ainsi de suite jusqu'à obtenir un minimum de la différence qui soit inférieur ou égal à la valeur seuil prédéterminée.

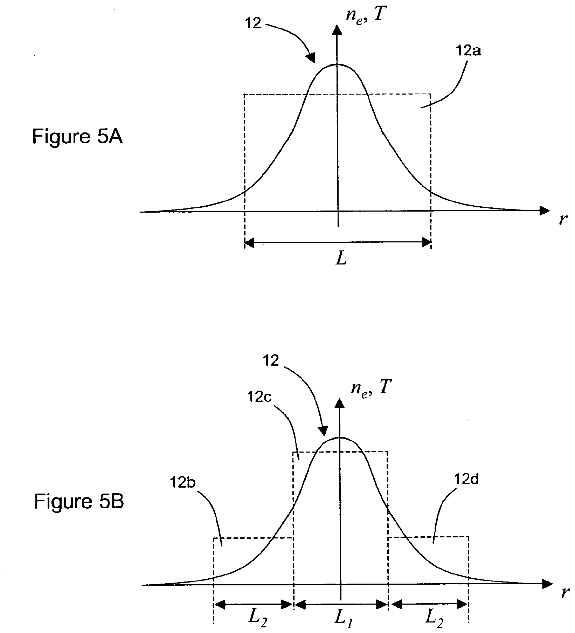

Une telle division est illustrée par les figures 5A et 5B. La figure 5A représente un plasma 12 constitué d'une seule zone uniforme 12a. La figure 5B représente un plasma 12 divisé en trois zones 12b, 12c et 12d sur lesquelles on suppose que la température et la densité électronique sont spatialement uniformes.

Dans le cas par exemple où l'on divise le plasma en deux zones uniformes, il peut être considéré que l'une représente le coeur chaud et dense (indexé 1) et l'autre la zone périphérique de température et de densité plus faibles (indexé 2). L'intégration de l'équation de transport de rayonnement donne alors :

Equation 7 :

$$\dot{I} = U_1.(1 - e^{-\alpha_1.L_1}).e^{-\alpha_2.L_2} + U_2.(1 - e^{-\alpha_2.L_2})$$

Cette expression peut être appliquée aux mesures LIBS indépendamment de la géométrie d'observation. Comparé au calcul de la luminance d'un plasma uniforme (équation 6), la précision des mesures LIBS est significativement améliorée pour une augmentation du temps de calcul raisonnable.

La comparaison entre spectres calculé et mesuré se fait dès lors en ajustant n+6 (au lieu de n+3) paramètres. En occurrence, on utilisera au moins n+6 raies spectrales pour la comparaison entre spectres calculé et mesuré.

De préférence, des raies spectrales émises par des constituants de potentiel d'ionisation élevés sont utilisées pour déterminés les paramètres $T$, $n_e$ et $L$ de la zone chaude, tandis que des raies spectrales émises par des constituants de potentiel d'ionisation faibles sont choisies pour déterminés les mêmes paramètres de la zone froide.

Dans la plupart des applications du présent procédé, les n concentrations relatives $C_X$ sont supposées être égales dans toutes les zones, conformément à l'hypothèse d'une ségrégation négligeable dans le plasma. Cependant, il est possible de tenir compte d'une éventuelle ségrégation, comme par exemple la ségrégation par diffusion des éléments légers dans le cas d'analyse LIBS sous atmosphère réduite (cas de l'analyse LIBS sur la planète Mars) en utilisant plusieurs zones et en ajustant les concentrations relatives pour tenir compte des distribution spatiales différentes des éléments dues à la ségrégation. Dans ce cas, une équation supplémentaire décrivant le phénomène de ségrégation sera rajoutée afin de faire converger le calcul rapidement.

Il convient de noter que les ajustements 34 suivants vont alors s'opérer sur chacune des zones définies au sein du plasma, afin d'affiner le résultat de la mesure.

Selon ce procédé de mesure de concentration, pour un matériau solide (ou liquide ou gazeux) composé de n éléments différents et un plasma divisé en m zones uniformes, le calcul implique ainsi n+3m paramètres à ajuster. Ces paramètres correspondent aux concentrations relatives des n éléments, ainsi que la température $T$, la densité électro-

nique $n_e$ et la dimension le long de l'axe d'observation $L$ de chacune des m zones du plasma.

La présente invention prévoit également la possibilité de tenir compte de la variation temporelle de paramètres $T$, $n_e$, et $L$. Ceci est nécessaire lorsque la mesure ne peut pas être effectuée avec une résolution temporelle suffisante et le spectre mesuré correspond au rayonnement généré par un plasma dont la température, la densité électronique ou la largeur a varié pendant la durée de l'acquisition. Dans ce cas, similaire à la façon de tenir compte de la variation spatiale des paramètres, on effectue une division en deux ou plusieurs fenêtres temporelles. La luminance totale est obtenue par simple addition des luminances calculées pour chaque fenêtre temporelle à partir des équations 6 ou 7.

Les modes de réalisation précédemment décrits de la présente invention sont donnés à titre d'exemples et ne sont nullement limitatifs. Il est entendu que l'homme du métier est à même de réaliser différentes variantes de l'invention sans pour autant sortir du cadre du brevet.

## Revendications

1. Procédé d'analyse quantitative d'une composition élémentaire de la matière à partir d'un échantillon (1) comportant une pluralité d'éléments aptes à générer un plasma (12) et à émettre un rayonnement (13), chaque élément comportant une pluralité de constituants, le procédé comprenant :

   • une étape de chauffage de la matière de l'échantillon (1) de manière à générer le plasma (12) émettant le rayonnement (13),
   • une étape d'identification (20) des raies spectrales d'intérêt parmi des raies spectrales émises par les constituants de chaque élément de l'échantillon (1) chauffé,
   • une étape de mesure (21) des intensités des raies spectrales d'intérêt,
   • une étape d'estimation (22) d'une température ($T$) du plasma (12),
   • une étape d'estimation (23) d'une densité électronique ($n_e$) du plasma (12),
   • une étape d'estimation (25) d'une largeur ($L$) du plasma (12) dans une direction d'observation,
   • une étape de calcul (27) d'une composition chimique du plasma (12) à partir des valeurs de la température ($T$), de la densité électronique ($n_e$) et des valeurs relatives des concentrations élémentaires de chaque élément de l'échantillon (1),
   • une étape de calcul (28) d'un coefficient d'absorption du plasma (12) au niveau des raies spectrales d'intérêt,
   **caractérisé en ce qu'**il comporte également :

      • une étape de calcul (29) d'une luminance spectrale du plasma (12),
      • une étape de calcul d'un spectre à partir de la composition chimique calculée (27) du plasma (12), du coefficient d'absorption calculé (28) du plasma (12) et de la luminance spectrale calculée (29) du plasma (12),
      • une étape de comparaison (30) de l'intensité et de la forme du spectre calculé avec l'intensité et la forme du spectre mesuré,
      **en ce que** les étapes de calcul (27) de la composition chimique, de calcul (28) du coefficient d'absorption, de calcul (29) de la luminance spectrale, de calcul du spectre et de comparaison (30) sont répétées de manière itérative, les valeurs de la température ($T$) du plasma (12), de la densité électronique ($n_e$) du plasma (12), de la largeur ($L$) du plasma (12) et des concentrations élémentaires étant ajustées (34) à chaque itération, jusqu'à l'obtention (31) d'une différence entre l'intensité et la forme du spectre calculé et l'intensité et la forme du spectre mesuré qui soit inférieure ou égale en valeur absolue à une valeur seuil prédéterminée, et
      **en ce qu'**il comporte également une étape de division (33) du plasma (12) en un nombre croissant de zones (12a), (12b), (12c), (12d) suivant la direction d'observation, chacune **caractérisée par** des valeurs différentes de température et densité électronique, ladite étape de division (33) étant conditionnée par l'obtention d'un minimum de la différence entre l'intensité et la forme du spectre calculé et l'intensité et la forme du spectre mesuré, ledit minimum étant supérieur en valeur absolue à la valeur seuil prédéterminée.

2. Procédé selon la revendication 1, **caractérisé en ce que** la luminance spectrale du plasma (12) est calculée (29) en utilisant des solutions analytiques de l'équation de transfert de rayonnement.

3. Procédé selon la revendication 1 ou 2, **caractérisé en ce que** la température est estimée (22) à partir du rapport d'intensité des raies spectrales émises par au moins un constituant d'un élément de l'échantillon (1).

4. Procédé selon l'une quelconque des revendications 1 à 3, **caractérisé en ce que** la densité électronique est estimée (23) à partir d'une mesure d'élargissement Stark d'au moins une raie spectrale.

**5.** Procédé selon l'une quelconque des revendications précédentes, **caractérisé en ce que** la largeur *(L)* du plasma (12) dans la direction d'observation est estimée (25) à partir d'une mesure d'intensité (21) ou de largeur de deux ou plusieurs raies spectrales auto-absorbées du même multiplet.

**6.** Procédé selon l'une quelconque des revendications 1 à 5, **caractérisé en ce que** l'itération commence avec un plasma (12) uniforme correspondant à une seule zone (12a).

**7.** Système pour l'analyse quantitative d'une composition élémentaire de la matière à partir d'un échantillon (1) comportant une pluralité d'éléments par des mesures de spectroscopie du plasma induit par laser, chaque élément comportant une pluralité de constituants, ledit système comprenant :

   • une source de rayonnement laser (2) apte à chauffer la matière de manière à générer un plasma (12) émettant un rayonnement (13),
   • des moyens optiques (4), (5) agencés pour diriger et focaliser le rayonnement issu de la source laser (2) vers l'échantillon (1),
   • un système optique (8) pour recevoir le rayonnement (13) émis par le plasma (12) généré par ledit échantillon (1),
   • un système d'analyse spectroscopique (9) de signaux optiques,
   • un dispositif informatique (10) comprenant :

      ◦ un moyen pour identifier (20) des raies spectrales d'intérêt parmi des raies spectrales émises par les constituants de chaque élément de l'échantillon (1),
      ◦ un moyen pour mesurer (21) des intensités des raies spectrales d'intérêt,
      ◦ un moyen pour estimer (22) une température *(T)* du plasma (12),
      ◦ un moyen pour estimer (23) une densité électronique $(n_e)$ du plasma (12),
      ◦ un moyen pour estimer (25) une largeur *(L)* du plasma (12) dans une direction d'observation,
      ◦ un moyen pour calculer (27) une composition chimique du plasma (12) à partir des valeurs de la température $(T)$, de la densité électronique $(n_e)$, et des valeurs relatives des concentrations élémentaires de chaque élément de l'échantillon (1),
      ◦ un moyen pour calculer (28) un coefficient d'absorption du plasma (12) en fonction de la longueur d'onde dans des zones spectrales sélectionnées pour l'observation des raies spectrales d'intérêt,

      **caractérisé en ce que** le dispositif informatique (10) comprend également :

      ◦ un moyen pour calculer (29) une luminance spectrale du plasma (12),
      ◦ un moyen pour calculer un spectre à partir de la composition chimique calculée (27) du plasma (12), du coefficient d'absorption calculé (28) du plasma (12) et de la luminance spectrale calculée (29) du plasma (12),
      ◦ un moyen pour comparer (30) l'intensité et la forme du spectre calculé avec l'intensité et la forme du spectre mesuré,

   **en ce que** les moyens pour calculer (27) la composition chimique du plasma (12), pour calculer (28) le coefficient d'absorption, pour calculer (29) la luminance spectrale, pour calculer le spectre et pour comparer (30) sont agencés de sorte à exécuter les calculs (27), (28), (29) et comparaisons (30) de manière successive et itérative, les valeurs de la température $(T)$ du plasma (12), de la densité électronique $(n_e)$ du plasma (12), de la largeur (L) du plasma (12) et des concentrations élémentaires étant ajustées (34) à chaque itération, jusqu'à l'obtention (31) d'une différence entre l'intensité et la forme du spectre calculé et l'intensité et la forme du spectre mesuré qui soit inférieure ou égale en valeur absolue à une valeur seuil prédéterminée, et
   **en ce que** le dispositif informatique (10) comprend également un moyen pour diviser (33) le plasma (12) en un nombre croissant de zones (12a), (12b), (12c), (12d) suivant la direction d'observation, chacune **caractérisée par** des valeurs différentes de température et densité électronique, ledit moyen de division étant agencé pour exécuter ladite division (33) à condition que la différence obtenue entre l'intensité et la forme du spectre calculé et l'intensité et la forme du spectre mesuré soit un minimum et que ledit minimum soit supérieur en valeur absolue à la valeur seuil prédéterminée.

**Patentansprüche**

**1.** Verfahren zur quantitativen Analyse einer elementaren Materialzusammensetzung anhand einer Probe (1), welche eine Vielzahl von Elementen beinhaltet, welche in der Lage sind, ein Plasma (12) zu erzeugen und eine Strahlung (13) auszusenden, wobei jedes Element eine Vielzahl von Bestandteilen beinhaltet, wobei das Verfahren Folgendes beinhaltet:

• einen Schritt des Erhitzens des Materials der Probe (1), um das Plasma (12) zu erzeugen, welches die Strahlung (13) aussendet,
• einen Schritt des Identifizierens (20) der relevanten Spektrallinien unter den durch die Bestandteile eines jeden Elementes der erhitzten Probe (1) ausgesendeten Spektrallinien,
• einen Schritt des Messens (21) der Intensitäten der relevanten Spektrallinien,
• einen Schritt des Schätzens (22) einer Temperatur ($T$) des Plasmas (12),
• einen Schritt des Schätzens (23) einer Elektronendichte ($n_e$) des Plasmas (12),
• einen Schritt des Schätzens (25) einer Breite ($L$) des Plasmas (12) in einer Beobachtungsrichtung,
• einen Schritt des Berechnens (27) einer chemischen Zusammensetzung des Plasmas (12) anhand der Werte der Temperatur ($T$), der Elektronendichte ($n_e$) und der relativen Werte der Elementarkonzentrationen eines jeden Elementes der Probe (1),
• einen Schritt des Berechnens (28) eines Absorptionskoeffizienten des Plasmas (12) im Bereich der relevanten Spektrallinien,

**dadurch gekennzeichnet, dass** es zudem Folgendes beinhaltet:

• einen Schritt des Berechnens (29) einer spektralen Leuchtdichte des Plasmas (12),
• einen Schritt des Berechnens eines Spektrums anhand der berechneten chemischen Zusammensetzung (27) des Plasmas (12), des berechneten Absorptionskoeffizienten (28) des Plasmas (12) und der berechneten spektralen Leuchtdichte (29) des Plasmas (12),
• einen Schritt des Vergleichens (30) der Intensität und der Form des berechneten Spektrums mit der Intensität und der Form des gemessenen Spektrums,

dadurch, dass die Schritte des Berechnens (27) der chemischen Zusammensetzung, des Berechnens (28) des Absorptionskoeffizienten, des Berechnens (29) der spektralen Leuchtdichte, des Berechnens des Spektrums und des Vergleichens (30) iterativ wiederholt werden, wobei die Werte der Temperatur ($T$) des Plasmas (12), der Elektronendichte ($n_e$) des Plasmas (12), der Breite ($L$) des Plasmas (12) und der Elementarkonzentrationen bei jeder Iteration angepasst (34) werden, bis zum Erzielen (31) einer Differenz zwischen der Intensität und der Form des berechneten Spektrums und der Intensität und der Form des gemessenen Spektrums, welche in Absolutwert betrachtet kleiner als ein oder gleich einem vorbestimmten Schwellenwert ist, und

dadurch, dass es ebenfalls einen Schritt des Teilens (33) des Plasmas (12) in eine ansteigende Anzahl von Bereichen (12a), (12b), (12c), (12d) entsprechend der Beobachtungsrichtung beinhaltet, wobei jeder Bereich durch unterschiedliche Werte in Bezug auf Temperatur und Elektronendichte gekennzeichnet ist, wobei der Schritt des Teilens (33) durch das Erzielen eines Mindestwertes der Differenz zwischen der Intensität und der Form des berechneten Spektrums und der Intensität und der Form des gemessenen Spektrums bedingt ist, wobei der Mindestwert in Absolutwert betrachtet größer als der vorbestimmte Schwellenwert ist.

2. Verfahren nach Anspruch 1, **dadurch gekennzeichnet, dass** die spektrale Leuchtdichte des Plasmas (12) unter Verwendung der analytischen Lösungen der Strahlungsübertragungsgleichung berechnet (29) wird.

3. Verfahren nach Anspruch 1 oder 2, **dadurch gekennzeichnet, dass** die Temperatur anhand des Intensitätsverhältnisses der durch mindestens ein Bestandteil eines Elementes der Probe (1) ausgesandten Spektrallinien geschätzt (22) wird.

4. Verfahren nach einem der Ansprüche 1 bis 3, **dadurch gekennzeichnet, dass** die Elektronendichte anhand einer Messung der Stark-Verbreiterung mindestens einer Spektrallinie geschätzt (23) wird.

5. Verfahren nach einem der vorhergehenden Ansprüche, **dadurch gekennzeichnet, dass** die Breite ($L$) des Plasmas (12) in der Beobachtungsrichtung anhand einer Messung der Intensität (21) oder der Breite von zwei oder mehr selbstabsorbierten Spektrallinien desselben Multipletts geschätzt (25) wird.

6. Verfahren nach einem der Ansprüche 1 bis 5, **dadurch gekennzeichnet, dass** die Iteration mit einem einheitlichen Plasma (12) beginnt, welches einem einzigen Bereich (12a) entspricht.

**7.** System zur quantitativen Analyse einer elementaren Materialzusammensetzung anhand einer Probe (1), welche eine Vielzahl von Elementen beinhaltet, anhand von Spektroskopiemessungen des laserinduzierten Plasmas, wobei jedes Element eine Vielzahl von Bestandteilen beinhaltet, wobei das System Folgendes beinhaltet:

• eine Laserstrahlungsquelle (2), welche in der Lage ist, das Material so zu erhitzen, dass ein Plasma (12) erzeugt wird, welches eine Strahlung (13) aussendet,
• optische Mittel (4), (5) welche angeordnet sind, um die aus der Laserquelle (2) stammende Strahlung auf die Probe (1) zu richten und zu fokussieren,
• ein optisches System (8) zum Empfangen der Strahlung (13), welche durch das durch die Probe (1) erzeugte Plasma (12) ausgesandt wird,
• ein System zur spektroskopischen Analyse (9) optischer Signale,
• eine EDV-Vorrichtung (10), welche Folgendes beinhaltet:

◦ ein Mittel zum Identifizieren (20) der relevanten Spektrallinien unter den durch die Bestandteile eines jeden Elementes der Probe (1) ausgesendeten Spektrallinien,
◦ ein Mittel zum Messen (21) der Intensitäten der relevanten Spektrallinien,
◦ ein Mittel zum Schätzen (22) einer Temperatur ($T$) des Plasmas (12),
◦ ein Mittel zum Schätzen (23) einer Elektronendichte ($n_e$) des Plasmas (12),
◦ ein Mittel zum Schätzen (25) einer Breite ($L$) des Plasmas (12) in einer Beobachtungsrichtung,
◦ ein Mittel zum Berechnen (27) einer chemischen Zusammensetzung des Plasmas (12) anhand der Werte der Temperatur ($T$), der Elektronendichte ($n_e$) und der relativen Werte der Elementarkonzentrationen eines jeden Elementes der Probe (1),
◦ ein Mittel zum Berechnen (28) eines Absorptionskoeffizienten des Plasmas (12) angesichts der Wellenlänge in zur Beobachtung der relevanten Spektrallinien ausgewählten spektralen Bereichen,

**dadurch gekennzeichnet, dass** die EDV-Vorrichtung (10) zudem Folgendes beinhaltet:

◦ ein Mittel zum Berechnen (29) einer spektralen Leuchtdichte des Plasmas (12),
◦ ein Mittel zum Berechnen eines Spektrums anhand der berechneten chemischen Zusammensetzung (27) des Plasmas (12), des berechneten Absorptionskoeffizienten (28) des Plasmas (12) und der berechneten spektralen Leuchtdichte (29) des Plasmas (12),
◦ ein Mittel zum Vergleichen (30) der Intensität und der Form des berechneten Spektrums mit der Intensität und der Form des gemessenen Spektrums,

dadurch, dass die Mittel zum Berechnen (27) der chemischen Zusammensetzung des Plasmas (12), zum Berechnen (28) des Absorptionskoeffizienten, zum Berechnen (29) der spektralen Leuchtdichte, zum Berechnen des Spektrums und zum Vergleichen (30) so angeordnet sind, dass die Berechnungen (27), (28), (29) und Vergleiche (30) nacheinander und iterativ ausgeführt werden, wobei die Werte der Temperatur ($T$) des Plasmas (12), der Elektronendichte ($n_e$) des Plasmas (12), der Breite ($L$) des Plasmas (12) und der Elementarkonzentrationen bei jeder Iteration angepasst (34) werden, bis zum Erzielen (31) einer Differenz zwischen der Intensität und der Form des berechneten Spektrums und der Intensität und der Form des gemessenen Spektrums, welche in Absolutwert betrachtet kleiner als ein oder gleich einem vorbestimmten Schwellenwert ist, und
dadurch, dass die EDV-Vorrichtung (10) ebenfalls ein Mittel zum Teilen (33) des Plasmas (12) in eine ansteigende Anzahl von Bereichen (12a), (12b), (12c), (12d) entsprechend der Beobachtungsrichtung beinhaltet, wobei jeder Bereich durch unterschiedliche Werte in Bezug auf Temperatur und Elektronendichte gekennzeichnet ist,
wobei das Mittel zum Teilen so angeordnet ist, dass es die Teilung (33) unter der Voraussetzung ausführt, dass die erzielte Differenz zwischen der zwischen der Intensität und der Form des berechneten Spektrums und der Intensität und der Form des gemessenen Spektrums ein Mindestwert ist, und dass der Mindestwert in Absolutwert betrachtet größer als der vorbestimmte Schwellenwert ist.

**Claims**

**1.** Method for quantitative analysis of an elemental composition of material from a sample (1) having several elements able to generate plasma (12) and emit radiation (13), each element containing several constituents, the method comprising:

• a step of heating the material of sample (1) so as to generate plasma (12) emitting radiation (13),

• a step of identifying (20) the spectral lines of interest among spectral lines emitted by the constituents of each heated element of sample (1),
• a step of measuring (21) the intensities of the spectral lines of interest,
• a step of estimating (22) a temperature ($T$) of plasma (12),
• a step of estimating (23) an electron density ($n_e$) of plasma (12),
• a step of estimating (25) a width ($L$) of plasma (12) in a direction of observation,
• a step of calculating (27) a chemical composition of plasma (12) from the values of the temperature ($T$), the electron density ($n_e$) and the relative values of the elemental concentrations of each element of sample (1),
• a step of calculating (28) an absorption coefficient of plasma (12) at the spectral lines of interest,

**characterized in that** it also includes:

• a step of calculating (29) a spectral radiance of plasma (12),
• a step of calculating a spectrum from the calculated chemical composition (27) of plasma (12), the calculated absorption coefficient (28) of plasma (12) and the calculated spectral radiance (29) of plasma (12),

a step of comparing (30) the intensity and the shape of the calculated spectrum with the intensity and shape of the measured spectrum,
**in that** the steps of calculating (27) the chemical composition, of calculating (28) the absorption coefficient, of calculating (29) the spectral radiance, of calculating the spectrum and of comparing (30) are repeated iteratively, the values of temperature ($T$) of plasma (12), electron density ($n_e$) of plasma (12), width ($L$) of plasma (12) and the elemental concentrations being adjusted (34) at each iteration, until obtaining (31) a difference between the intensity and shape of the calculated spectrum and the intensity and shape of the measured spectrum which is less than or equal, by absolute value, to a predetermined threshold value, and
**in that** it also comprises a step of dividing (33) plasma (12) into an increasing number of zones (12a), (12b), (12c), (12d) in the direction of observation, each **characterized by** different values of temperature and electron density, said dividing step (33) depending on obtaining a minimum of the difference between the intensity and shape of the calculated spectrum and the intensity and shape of the measured spectrum, said minimum being greater, by absolute value, than the predetermined threshold value.

2. Method according to claim 1, **characterized in that** the spectral radiance of plasma (12) is calculated (29) by using analytical solutions for the radiation transfer equation.

3. Method according to claim 1 or 2, **characterized in that** the temperature is estimated (22) from the intensity ratio of the spectral lines emitted by at least one constituent of one element of sample (1).

4. Method according to any one of claims 1 to 3, **characterized in that** the electron density is estimated (23) from a measurement of the Stark broadening of at least one spectral line.

5. Method according to any one of the preceding claims, **characterized in that** the width ($L$) of plasma (12) in the direction of observation is estimated (25) from measuring an intensity (21) or width of two or more self-absorbed spectral lines of the same multiplet.

6. Process according to any one of claims 1 to 5, **characterized in that** the iteration begins with uniform plasma (12) corresponding to a single zone (12a).

7. System for quantitative analysis of the elemental composition of a material from a sample (1) containing several elements by laser-induced plasma spectroscopy measurements, each element comprising a plurality of constituents, said system comprising:

• a laser radiation source (2) that can heat the material so as to generate plasma (12) emitting radiation (13),
• optical means (4), (5) arranged to direct and focus the radiation from laser source (2) to sample (1),
• an optical system (8) to receive radiation (13) emitted by plasma (12) generated by said sample (1),
• a system for spectroscopic analysis (9) of the optical signals,
• a computing device (10) comprising:

◦ means for identifying (20) the spectral lines of interest among spectral lines emitted by the constituents of each element of sample (1),

○ means for measuring (21) the intensities of the spectral lines of interest,
○ means for estimating (22) a temperature ($T$) of plasma (12),
○ means for estimating (23) an electron density ($n_e$) of plasma (12),
○ means for estimating (25) a width ($L$) of plasma (12) in a direction of observation,
○ means for calculating (27) a chemical composition of plasma (12) from the values of temperature ($T$), electron density ($n_e$), and the relative values of the elemental concentrations of each element of sample (1),
○ means for calculating (28) an absorption coefficient of plasma (12) according to the wavelength in spectral zones selected for observing the spectral lines of interest,

**characterized in that** the computing device (10) also comprises:

○ means for calculating (29) a spectral radiance of plasma (12),
○ means for calculating a spectrum from the calculated chemical composition (27) of plasma (12), the calculated absorption coefficient (28) of plasma (12) and the calculated spectral radiance (29) of plasma (12),
○ means for comparing (30) the intensity and shape of the spectrum thus calculated with the intensity and shape of the measured spectrum,

**in that** the means for calculating (27) the chemical composition of plasma (12), for calculating (28) the absorption coefficient, for calculating (29) the spectral radiance, for calculating the spectrum and for comparing (30) are arranged so as to execute the calculations (27), (28), (29) and comparisons (30) successively and iteratively, the values of temperature ($T$) of plasma (12), electron density ($n_e$) of plasma (12), width ($L$) of plasma (12) and elemental concentrations being adjusted (34) at each iteration, until obtaining (31) a difference between the intensity and shape of the calculated spectrum and the intensity and shape of the measured spectrum that is less than or equal to, by absolute value, to a predetermined threshold value,

and **in that** the computing device (10) also comprises means for dividing (33) plasma (12) into an increasing number of zones (12a), (12b), (12c), (12d) in the direction of observation, each being **characterized by** different values of temperature and electron density,

said dividing means being arranged to execute said division (33) provided that the difference obtained between the intensity and the shape of the calculated spectrum and the intensity and shape of the measured spectrum is a minimum and that said minimum is greater by absolute value, than the predetermined threshold value.

# Figure 1

EP 2 350 619 B1

Figure 2

Identification des raies spectrales d'intérêt　20

Mesure des intensités des raies spectrales　21

Estimation de la température de plasma (T)　22

Estimation de la densité électronique ($n_e$)　23

Estimation des concentrations élémentaires ($C_X$)　24

Estimation de la largeur du plasma (L)　25

Nombre de zones = 1　26

Calcul de la composition chimique du plasma　27

Calcul du coefficient d'absorption　28

Calcul de la luminance spectrale　29

Ajustement des paramètres ($T$ ; $n_e$ ; $L$ ; $C_X$, $X$ = 1, ..., n)　34

Minimum de la différence entre spectre calculé et spectre mesuré atteint ?　30

NON

OUI

Nombre de zones + 1　33

Minimum inférieur au seuil prédéterminé ?　32

NON

OUI

Fin　31

17

# Figure 3

# Figure 4

50

$$n_X{}^{\#} = n_X$$

51    44

$$n_e, T, Q_X^z, Q_{XY}^z$$

52

$$\sum_{z=0}^{m} n_X^z + \sum_{z=0}^{1} n_{X_2}^z = n_X{}^{\#}, X = 1, \ldots, N$$

54

$$n_X^z; X = 1, \ldots, N; z = 0, \ldots, m$$
$$n_{X_2}^z; X = 1, \ldots, N; z = 0, 1$$

Saha

53

Equilibre chimique

$$n_X^0, n_Y^0 \Rightarrow n_{XY}^0, X \neq Y$$

55    56

Saha

$$n_{XY}^1, X \neq Y$$

57    58

61

$$n_X{}^{\#} = \frac{n_X{}^* + n_X{}^{\#}}{2}, X = 1, \ldots, N$$

59

$$n_X{}^* = n_X - \sum_{Y=1, Y \neq X}^{N} \sum_{z=0}^{1} n_{XY}^z$$

60

$$\left| 1 - \frac{n_X{}^*}{n_X{}^{\#}} \right| > 10^{-2}, X = 1, \ldots, N$$

Figure 5A

Figure 5B

## RÉFÉRENCES CITÉES DANS LA DESCRIPTION

**Documents brevets cités dans la description**

- WO 9715811 A

- US 6657721 B

**Littérature non-brevet citée dans la description**

- **D. BULAJIC ; M. CORSI ; G. CRISTOFORETTI ; S. LEGNAIOLI ; V. PALLESCHI ; A. SALVETTI ; E. TOGNONI.** A procédure for correcting self-absorption in calibration free-laser induced breakdown spectroscopy. *Spectrochimica Acta Part B : Atomic Spectroscopy,* 2002, vol. 57, 339-353